(19) Europäisches Patentamt / European Patent Office / Office européen des brevets

(11) **EP 2 400 418 A1**

(12) **DEMANDE DE BREVET EUROPEEN**

(43) Date de publication:
   **28.12.2011 Bulletin 2011/52**

(51) Int Cl.:
   **G06F 21/00** *(2006.01)*  **G06F 21/02** *(2006.01)*
   **G06F 21/22** *(2006.01)*  **G06F 9/45** *(2006.01)*

(21) Numéro de dépôt: **10290341.6**

(22) Date de dépôt: **23.06.2010**

(84) Etats contractants désignés:
   **AL AT BE BG CH CY CZ DE DK EE ES FI FR GB GR HR HU IE IS IT LI LT LU LV MC MK MT NL NO PL PT RO SE SI SK SM TR**
   Etats d'extension désignés:
   **BA ME RS**

(71) Demandeur: **Trusted Logic**
   **92190 Meudon (FR)**

(72) Inventeur: **Phan, Guillaume**
   **78000 Versailles (FR)**

(54) **Contrôle des propriétés de performance et de sécurité d'un logiciel par transformation de code**

(57)   L'invention concerne un dispositif électronique à ressources contraintes, le dispositif comprenant un interpréteur pour exécuter des instructions, le dispositif étant caractérisé en ce qu'il comprend un module de conversion d'instructions pour recevoir une instruction exécutable par l'interpréteur, et remplacer ladite instruction par une autre instruction, exécutable par le même interpréteur et fonctionnellement identique, mais ayant un niveau de sécurité différent. L'invention concerne également une méthode pour contrôler les propriétés de performance et de sécurité d'un dispositif électronique à ressources contraintes.

E: instructions exécutables par le système

F: instructions standards

X

E - F: instructions non standards

Figure 1: Transformation X de l'ensemble R vers l'ensemble S

**Description**

L'invention concerne un dispositif électronique à ressources contraintes embarquant un logiciel dont on souhaite pouvoir contrôler le niveau de sécurité et de performance.

Les dispositifs électroniques à ressources contraintes sont typiquement des dispositifs portables dont les ressources et performances sont limités. Il s'agit notamment de systèmes embarqués, et en particulier de cartes à puces, de TPM, ou de tokens USB. Il s'agit de plus en plus souvent de systèmes informatiques ouverts, au sein desquels il est possible d'installer des logiciels (composants ou applications) non présents initialement. Les cartes à puce ouvertes sur lesquelles il est possible d'installer des applications (ex: banque, telecom, transport, identité, etc.) sont de plus en plus répandues (grâce notamment aux technologies Java Card, Multos, NET, etc.).

Pour des raisons de sécurité, il est souvent souhaitable, dans ce genre de système, de proscrire l'exécution de certaines instructions ou séquences d'instructions (qui composent les logiciels) lorsque celles-ci représentent un danger potentiel pour le système et/ou son contenu. On constate alors en général qu'une telle augmentation de la sécurité est obtenue au détriment des performances globales du système et vice versa, les propriétés de sécurité et de performances évoluant généralement de façon opposée (toutes choses égales par ailleurs).

Il existe de nombreuses techniques dites d'optimisation consistant à transformer certaines instructions ou suites d'instructions en des instructions et suites d'instructions ayant le même comportement fonctionnel, mais s'exécutant de manière plus efficace.

Dans le cas où le logiciel est fourni sous forme de code pour une machine virtuelle, la compilation à la volée (just-in-time compilation) consiste à transformer ledit code pour une machine virtuelle en code natif avant son exécution. L'exécution du code natif est plus rapide, mais le passage en code natif peut avoir d'autres défauts tels qu'une augmentation de la taille du code et une plus grande difficulté à appliquer des contrôles de sécurité.

Lorsque le résultat de l'exécution d'un fragment de programme est reproductible d'une exécution à l'autre dudit fragment, on sait conserver ce résultat dans un cache. Cette technique est rarement applicable à des vérifications de sécurité, car le cache est typiquement sous le contrôle du logiciel et non de l'environnement, tandis que la sécurité a pour but de protéger l'environnement du logiciel.

Dans l'état de l'art, on cherche à assurer la sécurité de l'environnement par rapport au logiciel installé, c'est-à-dire en pratique à s'assurer que le logiciel n'effectue pas certaines actions interdites telles que d'accéder à la mémoire en dehors de la zone qui lui est allouée.

Une approche très courante consiste à effectuer des vérifications de sécurité durant l'exécution du logiciel, à chaque fois que ledit logiciel exécute des instructions potentiellement dangereuses. Par exemple, on peut contrôler chaque lecture en mémoire afin de vérifier que la zone mémoire lue est bien allouée au logiciel. Ces vérifications prennent un temps substantiel et s'effectuent donc au détriment des performances du logiciel.

Une autre approche est d'analyser le code du logiciel avant son exécution, et de n'autoriser ladite exécution que si le code est considéré comme sûr. Une telle analyse dite statique est d'autant plus difficile et coûteuse qu'elle est précise, c'est-à-dire d'autant plus qu'elle accepte une grande proportion des logiciels sûrs. Une analyse statique conduit en pratique à rejeter de nombreux logiciels sûrs qui n'ont simplement pas pu être déterminés comme tels.

Il existe également d'autres approches. On peut par exemple dédoubler certaines parties de l'environnement d'exécution (par exemple avoir deux machines virtuelles java) et consacrer l'un (performant grâce à l'absence de mesures de sécurité) aux logiciels réputés sûrs, l'autre (sécurisé au détriment des performances) aux logiciels potentiellement dangereux. Un inconvénient de cette duplication est le coût induit par les composants matériels ou logiciels supplémentaires; la communication entre les deux environnements peut aussi être problématique.

Un système informatique dit ouvert est typiquement capable d'exécuter un ensemble prédéfini d'instructions. Les logiciels installés dans le système prennent en principe la forme d'une séquence d'instructions choisies dans cet ensemble, que le système pourra donc exécuter.

Le système peut être un sous-système virtuel d'un autre système, c'est-à-dire que le moteur d'exécution du système n'est pas un élément matériel tel un microprocesseur, mais un logiciel appelé machine virtuelle s'exécutant lui-même dans un autre système. Il pourra s'agir par exemple de la machine virtuelle Java (Java Virtual Machine, JVM) ou de sa variante, plus adaptée à des systèmes aux ressources limitées, la machine virtuelle Java Card™ (Java Card Virtual Machine, JCVM), et il existe dans le domaine des cartes à puces des technologies semblables, en particulier Multos et NET (de la société Microsoft).

Problématique inhérente à tout système dit ouvert, l'installation de tels logiciels dans le système peut représenter un risque pour le système, son contenu, et éventuellement la confidentialité de ce contenu, dès lors qu'il devient difficile de déterminer le niveau de confiance que l'on peut avoir en lesdits logiciels. Un logiciel malveillant pourra typiquement comporter une séquence d'instructions visant à nuire au système ou à son contenu, par exemple en modifiant ou espionnant les données contrôlées par un autre logiciel.

Pour garantir la sécurité de leur contenu, certains systèmes tentent de contrôler l'activité des logiciels qu'ils exécutent en contrôlant dynamiquement l'innocuité des instructions exécutées. Un tel système vérifiera par exemple qu'un logiciel ne provoque, volontairement ou non, aucun débordement de pile, n'essaie pas d'exécuter le code d'une autre application, ou n'essaie pas de modifier ou d'accéder à des données ne lui appartenant pas. Un tel système est par exemple une machine virtuelle Java Card™ vérifiant à l'exécution qu'une application ne tente pas de réaliser des opérations illégales visant notamment à accéder à des contenus de façon illicite. Mais l'adjonction de tels contrôles impacte en général beaucoup les performances.

Il est connu, dans le domaine des cartes à puce Java, que l'exécution de certaines séquences de bytecodes par la JCVM peut s'avérer dangereuse pour la carte et son contenu. C'est pourquoi la technologie Java Card™ préconise de vérifier le code des applets avant de les installer sur la carte. L'ensemble des vérifications à effectuer sur un fichier CAP est décrit dans Java Card 2.2 Off-Card Verifier (White Paper) June 2002, Sun Microsystems (disponible sur le site web http://java.sun.com/javacard). Cette vérification peut être effectuée à l'aide d'un outil de vérification fourni par Sun Microsystems (propriétaire de la technologie Java Card™). Cependant, cet outil ne peut être utilisé qu'en dehors de la carte, avant le chargement de l'application sur la carte.

Effectuer les mêmes vérifications sur la carte, au moment du chargement des applets, représente un défi car ces dernières peuvent s'avérer très couteuses en temps, compte tenu des ressources limitées de la carte. Pour diminuer les risques liés à l'absence de vérification des applets sur la carte, certaines cartes utilisent une JCVM dite défensive, c'est à dire, une JCVM effectuant un certain nombre de contrôles de sécurité supplémentaires, en fonction des bytecodes exécutés, pour pallier le fait que les applets chargées n'ont peut être pas été vérifiées (volontairement ou non) hors de la carte. Ces contrôles à l'exécution ont un impact direct sur les performances des applets java. Ainsi, un vérifieur embarqué dans la carte peut effectuer des vérifications statiques non exhaustives lors du chargement d'une applet dans la carte, et l'applet partiellement vérifiée peut alors faire l'objet de vérifications dynamiques (à chaque exécution).

Certaines sociétés ont toutefois réussi à développer et embarquer sur certaines de leurs cartes un tel vérifieur, alors qualifié de vérifieur embarqué. C'est notamment le cas de Trusted Logic, qui a déposé une demande de brevet FR 99/10697 à ce sujet. Pour ce faire, il s'avère cependant et en général nécessaire de considérer un ensemble Z d'hypothèses sur la forme des fichiers CAP que le vérifieur embarqué aura à vérifier, ceci pour la simple raison que certaines formes de CAP files (ex: séquences d'instructions) ne pourraient être vérifiées en un temps raisonnable sur une carte. Il ne devient alors possible de charger sur de telles cartes (embarquant un vérifieur) qu'un sous-ensemble de l'ensemble des CAP files valides, satisfaisant ces hypothèses.

Fort heureusement, il est en général possible de transformer les applets non vérifiables (ne satisfaisant pas les hypothèses Z) en applets vérifiables (satisfaisant les hypothèses Z), sans changer leur finalité (fonction), en transformant les constructions non vérifiables de ces applets en constructions vérifiables et fonctionnellement équivalentes. Une telle transformation peut en général être automatisée et réalisée par un outil en dehors de la carte. On nomme T cette transformation ainsi que l'outil permettant de la réaliser.

En intégrant un vérifieur sur la carte, la JCVM n'a plus besoin de pallier l'absence de vérification préalable au chargement de l'applet et n'a plus besoin d'être défensive. On se propose au final d'opter pour une meilleure performance des applets, au détriment de leur temps de chargement sur la carte (lié aux vérifications effectuées par la carte).

Malheureusement, dans le cas où une applet ne satisfaisant pas les hypothèses Z et non transformée par la transformation T, est chargée dans la carte, le vérifieur embarqué n'est pas en mesure de la traiter de façon appropriée, et prend en général la décision de la rejeter par mesure de sécurité (sans réellement avoir déterminé qu'elle était effectivement nocive).

Une carte à puce implémentant tout ou partie des technologies GlobalPlatform, par exemple GlobalPlatform Card Specification, version 2.1.1, GlobalPlatform (disponible sur http://www.globalplatform.org) peut, selon sa configuration exacte, offrir les mécanismes suivants:

- Authentification par la carte de l'entité (hors de la carte) effectuant l'installation de l'applet, par exemple l'émetteur de la carte. L'authentification peut être réalisée en utilisant un protocole cryptographique à clés secrètes ou publiques.
- Vérification par la carte d'une signature (DAP ou Data Authentication Pattern) de l'applet chargée, cette signature ayant été générée par une entité de confiance (ex: autorité de contrôle).

US 6904516 (Lam ; Sun Microsystems) décrit l'utilisation d'un cache. US 6978448 (Plummer, Fresko, Tuck ; Sun Microsystems), décrit une technique d'optimisation par pré-évaluation de certaines données.

Un problème des dispositifs électroniques à ressources contraintes de l'état de l'art est donc qu'ils ne permettent pas un contrôle fin des propriétés de performance et de sécurité des logiciels qu'ils exécutent.

L'invention a notamment pour objet un dispositif électronique portable (ainsi qu'une méthode) à même de permettre un contrôle plus fin que dans l'état de l'art.

Un dispositif électronique à ressources contraintes, selon l'invention prend par exemple la forme d'une carte à puce (bancaire, SIM, carte santé, etc.), d'un document électronique (carte d'identité électronique, passeport électronique, permis de conduire électronique, etc.), d'un token (tel qu'un token USB, un token ou badge sans contact, un secure MMC, etc.) un TPM (trusted plaform module), etc. En général le dispositif est alimenté électriquement par un hôte (c'est le cas pour la plupart des dispositifs selon l'invention, et en particulier pour les dispositifs préférés tels que les cartes à puce JavaCard, très majoritairement non équipées de source d'énergie). Le dispositif comprend un interpréteur pour exécuter des instructions, il peut s'agir par exemple d'une JVM (Java Virtual machine), ou un NET CLR, qui sont typiquement intégrés dans le microcontrôleur des cartes Java / .NET.

Le dispositif comprend un module de conversion d'instructions pour recevoir une instruction exécutable par l'interpréteur, et remplacer ladite instruction par une autre instruction, exécutable par le même interpréteur et fonctionnellement identique, mais ayant un niveau de sécurité différent. Ce module de conversion d'instructions peut prendre la forme d'un circuit électronique dédié, mais il peut également s'agir d'un processeur (tel qu'un processeur intégré au microcontrôleur d'une carte à puce, voire l'unique processeur du microcontrôleur) convenablement programmé, le programme en question pouvant être chargé par exemple dans une mémoire non volatile (EEPROM, FLASH, ROM etc.). La mémoire non volatile peut par exemple être une mémoire non volatile de microcontrôleur de carte à puce. Ce module de conversion peut être invoqué lors du chargement d'un programme (par exemple le chargement d'une applet JavaCard ou .NET, composée d'instructions) dans le dispositif. Ainsi, l'applet chargée peut être traitée par le module de conversion (c'est-à-dire que les instructions qui la composent sont transformées par le module de conversion) puis, selon un mode de réalisation préféré, stockée sous forme transformée dans le dispositif, la forme originale (à savoir dans l'exemple précédent, l'applet telle qu'envoyée au dispositif) étant de préférence détruite après transformation afin d'économiser de la mémoire dans le dispositif qui en a typiquement assez peu.

Selon un mode de réalisation préféré, le module de conversion d'instructions du dispositif est agencé pour remplacer une instruction par une instruction fonctionnellement identique mais ayant un niveau de sécurité supérieur. Ce module de conversion permet ainsi de sécuriser des instructions. Par exemple, une applet chargée dans le dispositif et considérée comme peu sûre peut être sécurisée grâce au module de conversion (les instructions qui la composent étant sécurisées par le module de conversion).

Selon un autre mode de réalisation préféré, le module de conversion d'instructions du dispositif est agencé pour remplacer une instruction par une instruction fonctionnellement identique, mais exécutable plus rapidement par l'interpréteur (et généralement moins sécurisée, sinon l'instruction d'origine n'aurait typiquement pas de raison d'être). Ainsi, si une applet jugée très sûre est chargée dans le dispositif, elle peut être transformée de manière à pouvoir l'exécuter plus rapidement. Les deux précédents modes de réalisation peuvent se combiner, c'est-à-dire que le module de conversion peut être capable à la fois d'accélérer ou de sécuriser des instructions, et faire l'un ou l'autre selon le contexte.

Selon un mode de réalisation préféré, le dispositif comprend un module d'analyse pour analyser un ensemble d'instructions afin de déterminer le niveau de confiance que le dispositif peut lui accorder, et pour ordonner ou non, selon le niveau de confiance ainsi déterminé, la conversion des instructions dudit ensemble par le module de conversion d'instructions. Ce module d'analyse peut prendre la forme d'un circuit électronique dédié, mais il peut également s'agir d'un processeur (tel qu'un processeur intégré au microcontrôleur d'une carte à puce, voire l'unique processeur du microcontrôleur) convenablement programmé, le programme en question pouvant être chargé par exemple dans une mémoire non volatile (EEPROM, FLASH, ROM etc.).

Selon un mode de réalisation préféré, le dispositif comprend un vérifieur embarqué pour vérifier un ensemble d'instructions, le module d'analyse étant agencé pour s'appuyer sur le vérifieur afin de déterminer le niveau de confiance que le dispositif peut accorder à un ensemble d'instructions. De façon préférée, le module d'analyse est agencé pour ordonner la conversion des instructions de l'ensemble en instructions plus sécurisées lorsque le vérifieur n'est pas à même de se prononcer sur le niveau de confiance que le dispositif peut accorder à un ensemble d'instructions. Ceci est avantageux car cela évite les risques liés à un ensemble d'instructions frauduleuses non détecté comme tel. Le module d'analyse peut également être agencé pour ordonner la conversion des instructions de l'ensemble en instructions exécutables plus rapidement par l'interpréteur, lorsque le vérifieur fournit au module d'analyse une information selon laquelle le niveau de confiance que le dispositif peut accorder à un ensemble d'instructions est supérieur à un seuil donné. Le dispositif ne prend alors pas grand risque en se passant de certaines vérifications, et peut ainsi accélérer le traitement et donc améliorer les performances.

Selon un mode de réalisation préféré, le dispositif est à même de recevoir des ensembles d'instructions signés, le module d'analyse étant en agencé pour vérifier la signature d'un ensemble d'instructions signé, et pour s'appuyer sur l'identité du signataire ainsi que sur la validité de la signature afin déterminer le niveau de confiance que le dispositif peut accorder à l'ensemble d'instructions signé. Par exemple, si les instructions sont associées à une signature RSA valide provenant d'un tiers de confiance, le dispositif peut estimer que les instructions sont sûres et peuvent être exécutées plus rapidement avec moins de vérifications.

Selon un mode de réalisation préféré le dispositif est à même de recevoir des instructions via un canal sécurisé, le module d'analyse étant en agencé pour déterminer le niveau de confiance que le dispositif peut accorder à des instructions reçues via un canal sécurisé en fonction du niveau de sécurité du canal sécurisé. Par exemple, selon le type de clé utilisé pour ouvrir le canal sécurisé, ou selon le protocole utilisé pour établir le canal sécurisé, le dispositif peut déterminer que le canal sécurisé est plus ou moins sûr, et traiter les instructions en conséquence.

L'invention concerne également une méthode pour contrôler les propriétés de performance et de sécurité d'un dispositif électronique à ressources contraintes, le dispositif comprenant un ensemble d'instructions, et un interpréteur à même d'exécuter lesdites instructions, la méthode comprenant une étape de réception par le dispositif d'un ordre de conversion ou de non conversion, et en cas de réception d'un ordre de conversion, une étape de remplacement, par le dispositif, des instructions de l'ensemble par des instructions exécutables par le même interpréteur et fonctionnellement identiques, mais ayant un niveau de sécurité différent.

Selon un mode de réalisation préféré, la méthode selon la revendication, comprenant également une étape d'analyse, par le dispositif, de l'ensemble d'instructions, afin de déterminer le niveau de confiance que le dispositif peut lui accorder, et, selon le niveau de confiance ainsi déterminé, une étape d'envoi interne au dispositif d'un ordre de conversion ou de non conversion. Ceci est avantageux, car le dispositif est alors la seule entité décidant ou non de la conversion, ce qui évite des attaques liées à une analyse externe pas nécessairement fiable (conduisant potentiellement à un ordre de conversion non pertinent et éventuellement à un risque en termes de sécurité).

Selon un mode de réalisation préféré, l'étape d'analyse s'appuie sur un vérifieur embarqué dans le dispositif. En particulier, lorsque le vérifieur n'est pas à même de se prononcer sur le niveau de confiance que le dispositif peut accorder à un ensemble d'instructions, le dispositif peut ordonner la conversion des instructions de l'ensemble en instructions plus sécurisées (de façon à se prémunir d'un risque potentiel). Lorsque le vérifieur fournit une information selon laquelle le niveau de confiance que le dispositif peut accorder à un ensemble d'instructions est supérieur à un seuil donné, le dispositif peut ordonner la conversion des instructions de l'ensemble en instructions exécutable plus rapidement par l'interpréteur, puisque la sécurité n'est a priori pas compromise par ces instructions.

Selon un mode de réalisation préféré, l'ensemble d'instructions est signé, la méthode comprenant une étape de vérification de la signature de l'ensemble, l'étape d'analyse s'appuyant sur l'identité du signataire ainsi que sur la validité de la signature pour déterminer le niveau de confiance que le dispositif peut accorder à l'ensemble d'instructions.

L'invention s'applique en particulier dans le cadre d'un système satisfaisant les hypothèses suivantes:

- Soit E l'ensemble des instructions que le système est capable d'exécuter (ex: opérations arithmétiques, lectures et écritures en mémoire, sauts conditionnels ou inconditionnels, appels de procédures ou fonctions, etc.)
- Soit F l'ensemble des instructions standards qui peuvent constituer les logiciels installés dans le système. L'ensemble F est un sous-ensemble strict de l'ensemble E. Les instructions restantes de E sont des instructions non standards, dites propriétaires.
- Soient R un sous-ensemble des instructions standards (F) et S un sous-ensemble des instructions propriétaires (E - F), et enfin X une transformation qui à tout élément de l'ensemble R associe exactement un élément de l'ensemble S.

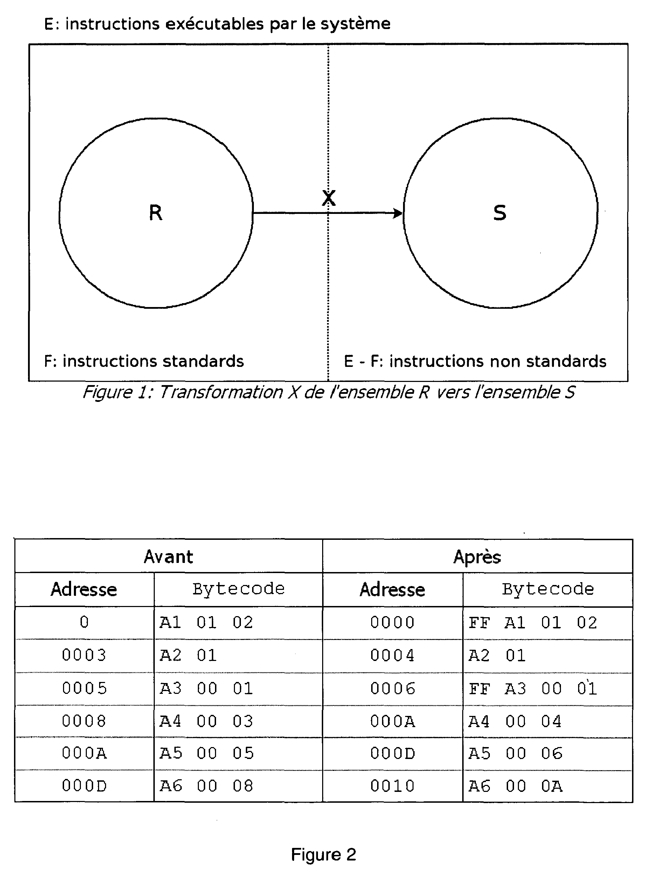

Cette situation est illustrée par la Figure 1.

- Les instructions de l'ensemble S obtenues par la transformation X ont des finalités (fonctions) identiques à leurs contreparties dans l'ensemble R mais leur exécution garantit un niveau de sécurité différent pour le système et son contenu. Par exemple, s'il existe dans R une instruction A réalisant une lecture mémoire, alors sa contrepartie B dans S obtenue par la transformation X réalise la même lecture mémoire, en contrôlant par exemple que le logiciel a bien le droit d'accéder à la zone mémoire concernée.

L'invention propose donc, sous certaines conditions, de transformer tout ou partie des instructions de l'ensemble R constituant un logiciel, en instructions de l'ensemble S, et ce pendant l'installation dudit logiciel dans le système. La transformation du logiciel pourra notamment consister en une application de la transformation X à tout ou partie des instructions du logiciel, séquentiellement et dans leur ordre d'apparition.

On se place sous l'une des hypothèses suivantes, mutuellement exclusives:

- Hypothèse H1: Les instructions de l'ensemble S sont des versions plus sécurisées que leurs contreparties dans l'ensemble R, c'est à dire effectuant des contrôles supplémentaires visant à garantir une meilleure sécurité pour le système et son contenu.
- Hypothèse H2: Les instructions de l'ensemble S sont des versions moins sécurisées que leurs contreparties dans l'ensemble R, garantissant notamment de meilleures performances pour les applications.

La transformation X pourra notamment être déclenchée en fonction du niveau de confiance que l'on peut avoir dans le logiciel installé dans le système.

- Selon l'hypothèse H1, si le système estime qu'il ne peut avoir entière confiance dans le logiciel installé, il pourra décider de le transformer afin d'augmenter le nombre de contrôles effectués lors de l'exécution du logiciel et ainsi garantir une meilleure sécurité pour le système et son contenu.

- Selon l'hypothèse H2, si le système estime qu'il peut avoir confiance dans le logiciel installé, il pourra décider de le transformer afin d'en augmenter les performances.

Le niveau de confiance accordé à un logiciel installé dans le système pourra dépendre d'un ou plusieurs des facteurs suivants:

- Une entité de confiance présente dans le système a pu vérifier une signature numérique (ou certificat numérique) du logiciel installé dans le système, prouvant que ce logiciel a été certifié par une entité de confiance hors du système (ex: autorité de contrôle ou émetteur de la carte).
- Le logiciel est installé dans le système par une entité de confiance (hors du système) authentifiée par le système. Une liste d'entités de confiance peut être prédéfinie et connue d'avance par le système, et éventuellement mise à jour, ainsi que les moyens d'authentifier ces entités (ex: clés secrètes ou certificats).
- Le logiciel installé est vérifié par le système selon un algorithme permettant d'affirmer que le logiciel n'est une menace ni pour le système ni pour son contenu.

L'invention s'applique en particulier aux cartes à puce implémentant tout ou partie des technologies Java Card™ (cf notamment Java Card Virtual Machine Specification, version 2.2 et ultérieures, Sun Microsystems http://java.sun.com/javacard) et GlobalPlatform (cf notamment GlobalPlatform Card Specification, version 2.1.1 et ultérieures, http://www.globalplatform.org). Il est notamment possible de charger sur cette carte des applications, ou applets, qui seront exécutées par la machine virtuelle Java Card™ (Java Card Virtual Machine, JCVM) hébergée par cette carte. Ces applets sont chargées sous la forme d'un fichier CAP (de l'anglais Converted Applet), dont le format est défini dans les spécifications Java Card ci-dessus.

Le code exécutable des applets est typiquement constitué de séquences d'instructions standards codées sur 1 octet, nommées « bytecodes » en anglais (i.e. codes sur 1 octet), et que la JCVM est capable d'exécuter. En réalité, Java Card ne définit qu'un ensemble d'instructions F, constitué de 185 instructions standards.

Deux situation distinctes peuvent alors se présenter:

- Hypothèse H3: La JCVM est uniquement capable d'exécuter des instructions codées sur 1 octet.

Ceci permet en théorie de définir jusqu'à 256 instructions exécutables. Dans ce cas, il est possible de définir un ensemble d'instructions S constitué au plus de 71 instructions propriétaires (i.e. non standards) que la JCVM sera capable d'exécuter en plus des instructions standards (au nombre de 185).

- Hypothèse H4: La JCVM est en fait capable d'exécuter des instructions codées sur plus d'1 octet.

Dans ce cas, il est possible de définir un ensemble d'instructions S constitué d'autant d'instructions propriétaires qu'on le souhaite, que la JCVM sera capable d'exécuter en plus des instructions standards.

On peut par exemple envisager d'utiliser l'octet 0xFF comme 1er octet de toute instruction propriétaire, et utiliser un 2ème octet pour coder effectivement l'instruction propriétaire, cette façon de faire permettant de définir un ensemble S si nécessaire au moins aussi grand que l'ensemble F des instructions standards.

Considérons un ensemble S d'instructions propriétaires, en bijection avec un sous-ensemble R de l'ensemble F des instructions standards, les instructions de l'ensemble S ayant des finalités (fonctions) identiques à leurs contreparties dans l'ensemble R, tout en garantissant des propriétés de sécurité différentes (hypothèses H1 ou H2). On envisage ainsi de transformer une applet, au moment de son installation dans le système et sous réserve que certaines conditions soient satisfaites, en y remplaçant les instructions standards appartenant à l'ensemble R en leurs contreparties propriétaires de l'ensemble S. Il s'agit de la transformation X de l'invention.

Selon l'hypothèse H1 de l'invention, les instructions de l'ensemble S seraient plus sécurisées que celle de l'ensemble R, et la transformation X aurait pour effet de garantir une meilleure sécurité pour le système et son contenu.

Selon l'hypothèse H2 de l'invention, les instructions de l'ensemble S seraient moins sécurisées que celle de l'ensemble R, et la transformation X aurait pour effet d'augmenter les performances de l'applet transformée.

Dans le cas de l'hypothèse H3, une telle transformation est triviale, étant donné que les codes d'instructions des ensembles R et S ont la même taille (1 octet), et consiste simplement en un remplacement des codes d'instructions de l'ensemble R par les instructions correspondantes de l'ensemble S.

Dans le cas de l'hypothèse H4, une telle transformation reste relativement simple, et peut s'effectuer en deux phases:

- Un premier parcours du code de l'applet (Method Component du fichier CAP) permet d'établir l'adresse de chaque instruction après transformation, notamment en repérant les instructions candidates au remplacement (i.e. celles appartenant à l'ensemble R) et en prenant en compte le décalage d'adresse qu'introduira leur remplacement. On pourra ainsi construire une table donnant la nouvelle adresse de chaque instruction (accélère la phase 2, mais plus gourmand en mémoire), ou bien établir les paramètres d'une fonction permettant de calculer les nouvelles adresses en fonction des anciennes (ex: liste des décalages d'adresse à appliquer en fonction de l'adresse courante). Diverses optimisations peuvent être envisagées.

- Un second parcours permet de procéder effectivement à la transformation, en remplaçant les instructions de l'ensemble R par leurs contreparties dans l'ensemble S, et en remplaçant les anciennes adresses par les nouvelles (calculées à l'aide de la table ou fonction établie en phase 1) dans toutes les instructions prenant une ou plusieurs adresses d'instructions en argument (ex: sauts, branchements, retours d'appels de fonctions, gestionnaires d'exceptions, etc.)

Nous décrivons ci-dessous un exemple de ce qui vient d'être présenté.

Soient R = {OxA1, ..., OxAn} un sous ensemble des instructions standards, codées sur 1 octet, et S = (0xFFA1, ..., 0xFFAn} un ensemble d'instructions propriétaires, codées sur 2 octets. Les ensembles R et S étant en bijection on souhaite transformer les instructions OxAn de l'ensemble R en leur contrepartie 0xFFAn de l'ensemble S.

On note au passage que la convention de codage adoptée pour les codes d'instructions de l'ensemble S, qui consiste à ajouter le préfixe OxFF à n'importe quel code d'instruction de l'ensemble R, permet à la JCVM de détecter ces derniers très simplement.

Dans l'exemple suivant, illustré sur la figure 2:

- Les adresses (relatives) sont codées sur 2 octets.
- On souhaite transformer les instructions 0xA1 et 0xA3 en 0xFFA1 et 0xFFA3 respectivement.
- Les instructions 0xA4, 0xA5 et 0xA6 prennent en argument l'adresse (codée sur 2 octets) d'une autre instruction.

Étape 1: Construire une table T contenant l'adresse de chaque occurrence d'instruction que l'on souhaite modifier (i.e. {OxA1, OxA3}).

Étape 2: Effectuer la transformation en modifiant toutes les adresses, en calculant chaque nouvelle adresse à l'aide de la fonction newaddress suivante (basée sur T) décrite en pséudo-code:

```
def newaddress(oldadd) {
  D = 0;
  foreach A in T do {
    if ( oldadd < A )
      break;
    D++;
  }
  return (oldadd + D);
}
```

Il y a bien entendu de multiples façons d'optimiser cette transformation. Typiquement, on pourra mémoriser une position courante dans la table T afin d'éviter de parcourir la table T dans sa totalité lors de chaque appel.

Selon l'hypothèse H1, l'implémentation des instructions standards est moins sécurisée que celle des instructions propriétaires, et le système déclenchera la transformation s'il ne peut déterminer avec certitude qu'il peut avoir confiance dans l'application en cours d'installation, afin de se prémunir l'éventuelle malveillance de cette dernière.

Selon l'hypothèse H2, l'implémentation des instructions standards est plus sécurisée que celle des instructions propriétaires, et le système déclenchera la transformation s'il détermine qu'il peut avoir confiance dans l'application en cours d'installation, afin de lui conférer de meilleures performances.

On note par ailleurs que dans tous les cas, si le système détermine avec certitude qu'il ne peut avoir confiance dans l'application en cours d'installation, l'installation de cette dernière sera tout simplement rejetée.

Différents critères permettent au système de déterminer le niveau de confiance qu'il peut avoir dans une application en cours d'installation. Ces critères peuvent éventuellement être combinés.

Lorsqu'un tel vérifieur embarqué est présent sur la carte, on suppose en général que toutes les applets chargées doivent être vérifiées avec succès, sous peine d'être rejetées par le système. Dans ce cas, il reste dommage de devoir rejeter des fichiers CAP valides mais non vérifiables, n'ayant pas subi la transformation T et ne satisfaisant pas les hypothèses Z. Il est en effet possible que l'entité responsable du chargement de l'applet, pour des raisons purement organisationnelles (ex: gestion de configuration), ne soit pas au courant de la présence d'un tel vérifieur sur la carte. Il est par ailleurs difficile de savoir par avance, sans passer par la transformation T, si un fichier CAP valide comporte ou non des constructions non vérifiables pour le vérifieur embarqué, et ce d'autant plus que les hypothèses Z peuvent potentiellement varier d'une carte à l'autre.

Pour ne pas avoir à rejeter ces fichiers CAP non vérifiables mais néanmoins valides, l'invention propose de considérer la vérification des applets par le vérifieur embarqué, non comme un critère d'acceptation par le système, mais comme apportant un niveau de confiance suffisant pour déclencher ou non la transformation X des applets, selon qu'on se place sous les hypothèses H1 ou H2 de l'invention. L'invention permet dans ce cas d'envisager une politique d'acceptation plus flexible pour les applets, en dépit des contraintes imposées par la présence d'un vérifieur embarqué.

En se plaçant sous les hypothèses H1, lorsque la vérification échoue parce que l'applet est non vérifiable, on considère qu'il est nécessaire d'appliquer la transformation X pour prévenir tout risque pour le système. Inversement, si la vérification réussit, aucune transformation n'est nécessaire et l'applet peut s'exécuter en utilisant les instructions standards plus performantes (moins sécurisées).

En se plaçant sous les hypothèses H2, lorsque la vérification réussit, on considère que l'on peut appliquer la transformation X pour augmenter les performances de l'applet. Inversement, si la vérification échoue parce que l'applet est non vérifiable, on préférera conserver les instructions standards plus sécurisées.

Dans le cas où seule une vérification partielle de l'applet aura pu être effectuée (ex: interruption en raison de la présence d'une construction non vérifiable), on considérera éventuellement l'optimisation qui consiste à utiliser les instructions plus performantes pour les séquences d'instructions ayant pu être vérifiées, et les instructions plus sécurisées pour les séquences d'instructions n'ayant pu être vérifiées.

Nous avons vu que les instructions exécutées par la JCVM pouvaient être plus ou moins sécurisées, c'est à dire exercer plus ou moins de contrôles visant à garantir une meilleure sécurité pour le système et de son contenu.

Ces contrôles peuvent être par exemple:

- Ceux que la JCVM pourrait vouloir effectuer pour garantir la sécurité du système et de son contenu, selon que l'applet chargée a été complètement, partiellement ou pas du tout vérifiée selon les règles décrites dans Java Card 2.2 Off-Card Verifier (White Paper), June 2002, Sun Microsystems (http://java .sun.com/javacard).
- Un sous-ensemble des contrôles du firewall Java CardTM, décrits dans Java Card Environment Specification, version 2.2 et ultérieures, Sun Microsystems (http://java .sun.com/javacard), dont certains peuvent potentiellement être jugés non nécessaires lorsque le niveau de confiance dans l'applet chargée est suffisamment élevé.

Nous donnons ci-dessous quelques exemples de bytecodes Java Card pouvant typiquement bénéficier d'implémentations sécurisées et non sécurisées. Ces bytecodes peuvent également être sécurisés de différentes façon, et plus ou moins complètement.

**sipush byte1 byte2**

Ce bytecode permet d'empiler un entier signé codé sur 2 octets (short) sur la pile d'opérandes.

La taille maximale de la pile d'opérandes étant pré-calculée et spécifiée pour chaque fonction (lors de la compilation de l'application), ce qui permet à la VM d'allouer les ressources mémoire nécessaires à l'exécution d'une fonction, ce bytecode ne devrait pas être abusivement utilisé dans le but d'empiler un opérande au delà de la taille maximale de cette pile, provoquant ainsi un débordement de pile et mettant potentiellement en danger d'autres informations.

Ceci fait typiquement partie des vérifications effectuées par le vérifieur embarqué lorsqu'il est présent sur la carte. En l'absence de telles vérifications, antérieures à l'exécution de l'application, la VM doit notamment vérifier que l'exécution de ce bytecode ne risque pas de provoquer un débordement de pile.

**jsr byte1 byte2**

Ce bytecode permet de faire un saut, et de poursuivre l'exécution à l'adresse spécifiée (sur 2 octets). Cette adresse devrait normalement se demeurer dans le corps de la fonction en cours d'exécution, mais une application malveillante pourrait potentiellement effectuer un saut vers n'importe quelle adresse.

Ceci fait typiquement partie des vérifications effectuées par le vérifieur embarqué lorsqu'il est présent sur la carte. En l'absence de telles vérifications, antérieures à l'exécution de l'application, la VM doit notamment vérifier que l'adresse spécifiée est valide (i.e. demeure dans le corps de la fonction en cours d'exécution).

**aload index**

Ce bytecode permet d'empiler la valeur d'une variable locale (une référence d'objet) sur la pile d'opérandes. Le nombre de variables locales (arguments compris) étant pré-calculée et spécifiée pour chaque fonction (lors de la compilation de l'application), ce qui permet à la VM d'allouer les ressources mémoire nécessaires à l'exécution d'une fonction, l'index de variable locale se doit d'être valide, sinon ce bytecode pourrait potentiellement servir à lire au delà de la pile. Par ailleurs, ladite variable locale doit contenir soit la valeur nulle, soit une référence d'objet valide.

Ceci fait typiquement partie des vérifications effectuées par le vérifieur embarqué lorsqu'il est présent sur la carte. En l'absence de telles vérifications, antérieures à l'exécution de l'application, la VM doit notamment vérifier que l'index de variable locale est valide, et que sa valeur est nulle ou qu'elle référence un objet existant.

**putfield-s index**

Ce bytecode permet de stocker dans un champ d'objet un entier signé codé sur 2 octets (short). La référence de l'objet, ainsi que la valeur à stocker ont préalablement été empilés sur la pile d'opérandes. L'objet en question ne doit pas être un tableau (ex: byte array), mais un objet "normal" et l'index de champs doit être valide. Enfin, la valeur à stocker dans le champ doit être d'un type compatible.

Ceci fait typiquement partie des vérifications effectuées par le vérifieur embarqué lorsqu'il est présent sur la carte. En l'absence de telles vérifications, antérieures à l'exécution de l'application, la VM doit notamment vérifier que l'objet n'est pas un tableau, mais un objet « normal », que l'index de champs est valide.

L'invention permet ainsi de modifier le rapport sécurité/performance des applications, en modifiant leur code binaire, sans modification de leurs fonctionnalités.

La transformation est de préférence effectuée par le système sur lequel les applications sont installées, après détermination par le système lui-même du niveau de confiance accordé à ces applications.

L'invention permet d'envisager une politique d'acceptation flexible en dépit de la présence d'un vérifieur embarqué, en considérant notamment le cas où ce vérifieur ne parvient pas à fournir un résultat certain. Elle permet aussi d'offrir de meilleures performances aux applications jugées sûres par le système, et de conserver un niveau de sécurité élevé pour un système qui accepterait l'installation d'applications dont il ne peut déterminer les intentions avec certitude.

**Revendications**

1. Dispositif électronique à ressources contraintes, le dispositif comprenant un interpréteur pour exécuter des instructions, le dispositif étant **caractérisé en ce qu'**il comprend un module de conversion d'instructions pour

   a. recevoir une instruction exécutable par l'interpréteur, et
   b. remplacer ladite instruction par une autre instruction, exécutable par le même interpréteur et fonctionnellement identique, mais ayant un niveau de sécurité différent.

2. Dispositif selon la revendication 1, dans lequel le module de conversion d'instructions est agencé pour remplacer une instruction par une instruction fonctionnellement identique mais ayant un niveau de sécurité supérieur.

3. Dispositif selon la revendication 1 ou 2, dans lequel le module de conversion d'instructions est agencé pour remplacer une instruction par une instruction fonctionnellement identique, mais exécutable plus rapidement par l'interpréteur.

4. Dispositif selon l'une des revendications précédentes, comprenant un module d'analyse pour

   a. analyser un ensemble d'instructions afin de déterminer le niveau de confiance que le dispositif peut lui accorder, et
   b. ordonner ou non, selon le niveau de confiance ainsi déterminé, la conversion des instructions dudit ensemble par le module de conversion d'instructions.

5. Dispositif selon la revendication 4, comprenant un vérifieur embarqué pour vérifier un ensemble d'instructions, le module d'analyse étant agencé pour s'appuyer sur le vérifieur afin de déterminer le niveau de confiance que le dispositif peut accorder à un ensemble d'instructions.

6. Dispositif selon la revendication 5, dont le module d'analyse est agencé pour ordonner la conversion des instructions de l'ensemble en instructions plus sécurisées lorsque le vérifieur n'est pas à même de se prononcer sur le niveau de confiance que le dispositif peut accorder à un ensemble d'instructions.

7. Dispositif selon la revendication 5 ou 6, dans lequel le module d'analyse est agencé pour ordonner la conversion des instructions de l'ensemble en instructions exécutables plus rapidement par l'interpréteur, lorsque le vérifieur fournit au module d'analyse une information selon laquelle le niveau de confiance que le dispositif peut accorder à un ensemble d'instructions est supérieur à un seuil donné.

8. Dispositif selon l'une des revendications 4 à 7, à même de recevoir des ensembles d'instructions signés, le module d'analyse étant agencé pour vérifier la signature d'un ensemble d'instructions signé, et pour s'appuyer sur l'identité du signataire ainsi que sur la validité de la signature afin déterminer le niveau de confiance que le dispositif peut accorder à l'ensemble d'instructions signé.

9. Dispositif selon l'une des revendications 4 à 8, à même de recevoir des instructions via un canal sécurisé, le module d'analyse étant en agencé pour déterminer le niveau de confiance que le dispositif peut accorder à des instructions reçues via un canal sécurisé en fonction du niveau de sécurité du canal sécurisé.

10. Méthode pour contrôler les propriétés de performance et de sécurité d'un dispositif électronique à ressources contraintes, le dispositif comprenant

   a. un ensemble d'instructions, et
   b. un interpréteur à même d'exécuter lesdites instructions,
   la méthode étant **caractérisée en ce qu'**elle comprend
   c. une étape de réception par le dispositif d'un ordre de conversion ou de non conversion, et
   d. en cas de réception d'un ordre de conversion, une étape de remplacement, par le dispositif, des instructions de l'ensemble par des instructions exécutables par le même interpréteur et fonctionnellement identiques, mais ayant un niveau de sécurité différent.

11. Méthode selon la revendication 10, comprenant

   a. une étape d'analyse, par le dispositif, de l'ensemble d'instructions, afin de déterminer le niveau de confiance que le dispositif peut lui accorder, et,
   b. selon le niveau de confiance ainsi déterminé, une étape d'envoi interne au dispositif d'un ordre de conversion ou de non conversion.

12. Méthode selon la revendication 11, l'étape d'analyse s'appuyant sur un vérifieur embarqué dans le dispositif.

13. Méthode selon la revendication 12, selon laquelle, lorsque le vérifieur n'est pas à même de se prononcer sur le niveau de confiance que le dispositif peut accorder à un ensemble d'instructions, le dispositif ordonne la conversion des instructions de l'ensemble en instructions plus sécurisées.

14. Méthode selon la revendication 12 ou 13, dans laquelle, lorsque le vérifieur fournit une information selon laquelle le niveau de confiance que le dispositif peut accorder à un ensemble d'instructions est supérieur à un seuil donné, le dispositif ordonne la conversion des instructions de l'ensemble en instructions exécutable plus rapidement par l'interpréteur.

15. Méthode selon l'une des revendications 11 à 14, selon laquelle l'ensemble d'instructions est signé, la méthode comprenant une étape de vérification de la signature de l'ensemble, l'étape d'analyse s'appuyant sur l'identité du signataire ainsi que sur la validité de la signature pour déterminer le niveau de confiance que le dispositif peut accorder à l'ensemble d'instructions.

E: instructions exécutables par le système

F: instructions standards | E - F: instructions non standards

*Figure 1: Transformation X de l'ensemble R vers l'ensemble S*

| Avant | | Après | |
|-------|---------|-------|---------|
| Adresse | Bytecode | Adresse | Bytecode |
| 0 | A1 01 02 | 0000 | FF A1 01 02 |
| 0003 | A2 01 | 0004 | A2 01 |
| 0005 | A3 00 01 | 0006 | FF A3 00 01 |
| 0008 | A4 00 03 | 000A | A4 00 04 |
| 000A | A5 00 05 | 000D | A5 00 06 |
| 000D | A6 00 08 | 0010 | A6 00 0A |

Figure 2

Europäisches
Patentamt

European
Patent Office

Office européen
des brevets

**RAPPORT DE RECHERCHE EUROPEENNE**

Numéro de la demande

EP 10 29 0341

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | US 2008/040607 A1 (KAABOUCH MAJID [FR] ET AL) 14 février 2008 (2008-02-14) | 1-3,10 | INV. G06F21/00 |
| Y | * alinéas [0002], [0010], [0021], [0030], [0035], [0045], [0048], [0051] * * figure 2 * | 4-9, 11-15 | G06F21/02 G06F21/22 G06F9/45 |
| X | EP 2 196 934 A1 (GEMALTO SA [FR]) 16 juin 2010 (2010-06-16) | 1-3,10 | |
| A | * alinéas [0033], [0035], [0037], [0042], [0043], [0044], [0049], [0051], [0057], [0058], [0070] * | 4-9, 11-15 | |
| Y | US 2004/148514 A1 (FEE GREGORY D [US] ET AL) 29 juillet 2004 (2004-07-29) * alinéas [0009], [0025], [0040], [0052], [0053], [0064], [0100] * | 4-9, 11-15 | |
| X | US 2010/058477 A1 (CIET MATHIEU [FR] ET AL) 4 mars 2010 (2010-03-04) | 1-3,10 | |
| A | * alinéas [0009], [0027], [0035], [0039], [0041] * | 4-9, 11-15 | DOMAINES TECHNIQUES RECHERCHES (IPC) |
| X | US 2006/136867 A1 (SCHNEIDER MANFRED [DE] ET AL) 22 juin 2006 (2006-06-22) | 1-3,10 | G06F |
| A | * alinéas [0005], [0012], [0026], [0031] * | 4-9, 11-15 | |
| A | US 2003/056054 A1 (LEVY MOSHE [US] ET AL) 20 mars 2003 (2003-03-20) * alinéas [0001], [0008], [0009], [0027], [0029] * * figure 3 * | 4-9, 11-15 | |
| A | WO 01/99030 A2 (MICROSOFT CORP [US]) 27 décembre 2001 (2001-12-27) * page 2, ligne 25 - page 2, ligne 28 * * page 5, ligne 6 - page 5, ligne 9 * * page 9, ligne 21 - page 10, ligne 7 * | 4-9, 11-15 | |

Le présent rapport a été établi pour toutes les revendications

| Lieu de la recherche | Date d'achèvement de la recherche | Examinateur |
|---|---|---|
| La Haye | 30 novembre 2010 | Volpato, Gian Luca |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

**EP 2 400 418 A1**

### ANNEXE AU RAPPORT DE RECHERCHE EUROPEENNE
### RELATIF A LA DEMANDE DE BREVET EUROPEEN NO.

EP 10 29 0341

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

30-11-2010

| Document brevet cité au rapport de recherche | | Date de publication | Membre(s) de la famille de brevet(s) | | Date de publication |
|---|---|---|---|---|---|
| US 2008040607 | A1 | 14-02-2008 | WO | 2008021866 A1 | 21-02-2008 |
| EP 2196934 | A1 | 16-06-2010 | WO | 2010066800 A1 | 17-06-2010 |
| US 2004148514 | A1 | 29-07-2004 | US | 7131143 B1 | 31-10-2006 |
| US 2010058477 | A1 | 04-03-2010 | AUCUN | | |
| US 2006136867 | A1 | 22-06-2006 | AUCUN | | |
| US 2003056054 | A1 | 20-03-2003 | AUCUN | | |
| WO 0199030 | A2 | 27-12-2001 | AT | 402450 T | 15-08-2008 |
| | | | AU | 7485601 A | 02-01-2002 |
| | | | EP | 1309906 A2 | 14-05-2003 |
| | | | HK | 1055827 A1 | 16-01-2009 |
| | | | JP | 2003536176 T | 02-12-2003 |
| | | | US | 2003041267 A1 | 27-02-2003 |
| | | | US | 7051366 B1 | 23-05-2006 |

EPO FORM P0460

Pour tout renseignement concernant cette annexe : voir Journal Officiel de l'Office européen des brevets, No.12/82

**EP 2 400 418 A1**

## RÉFÉRENCES CITÉES DANS LA DESCRIPTION

**Documents brevets cités dans la description**

- FR 9910697
- US 6904516 B
- US 6978448 B